# EUROPÄISCHE PATENTSCHRIFT

(11) **EP 2 190 647 B1**
(45) Veröffentlichungstag und Bekanntmachung des Hinweises auf die Patenterteilung: **27.05.2015**
(21) Anmeldenummer: 08774434.8
(22) Anmeldetag: 27.06.2008
(51) Int. Cl.: B29C 70/20, F16F 9/04, F16F 9/05, F16J 3/06

(54) **LUFTFEDER-ROLLBALG**
AIR SPRING ROLLING BELLOWS
SOUFFLET ROULANT DE RESSORT PNEUMATIQUE

(30) Priorität: 11.09.2007 DE 102007043277
(43) Veröffentlichungstag der Anmeldung: 02.06.2010
(73) Patentinhaber: Continental Teves AG & Co. OHG, 60488 Frankfurt (DE)
(72) Erfinder: BINDER, Klaus, 31157 Sarstedt (DE); WOYCIECHOWSKI, Guido, 30161 Hannover (DE)
(86) Internationale Anmeldenummer: PCT/EP2008/058269
(87) Internationale Veröffentlichungsnummer: WO 2009/033836

(56) Entgegenhaltungen:
- DE-A1- 19 614 476
- DE-A1- 19 716 250
- FR-A- 1 187 805
- GB-A- 1 143 665
- JP-A- 61 017 733

## Beschreibung

Die Erfindung betrifft einen Luftfeder-Rollbalg mit mindestens einer innerhalb der Rollbalgwand angeordneten Lage von Festigkeitsträgern, wobei der Rollbalg so zwischen zwei Anschlussteilen befestigt ist, dass der Rollbalg unter Befüllung mit Druckluft eine einem Anschlussteil benachbarte Rollfalte und eine sich daran anschließende und im wesentlichen zylindrische Luftfederkammer ausbildet, wobei die Festigkeitsträger der einzelnen Lagen in einem Winkel ausgerichtet sind, nämlich in einem sogenannten Fadenwinkel, wobei die Festigkeitsträger in den Bereichen der Rollfaltenbildung des Rollbalges in einem solchen Winkel in der Rollbalgwand einvulkanisiert sind, dass beim Abrollen der Rollfalte auf der zugehörigen Abrollkontur die Amplitude der dabei erfolgenden Spannungsänderung in der Rollbalgwand minimiert wird, die Festigkeitsträger in den Bereichen der Rollfaltenbildung des Rollbalges in einem solchen Winkel in der Rollbalgwand einvulkanisiert sind, dass beim Abrollen der Rollfalte auf der zugehörigen Abrollkontur die Amplitude der dabei erfolgenden Fadenwinkeländerung so minimiert wird, dass sich ein zwischen den Extrema der Spannungen liegender mittlerer Spannungszustand im Rollfaltenbereich ausbildet. Ebenfalls betrifft die Erfindung ein Verfahren zur Herstellung eines solchen Luftfeder-Rollbalges.

Solche Luftfeder-Rollbälge sind bekannt uns werden häufig zur anpassbaren Luftfederung von Personenkraftwagen, Lastkraftwagen oder Eisenbahnwagons eingesetzt. Auch sind Anwendungen im Bereich von Maschinen- oder Fundamentlagerungen bekannt. Ein Rollbalg für eine Luftfeder eines Personenkraftwagens besteht in der Regel aus Elastomerwerkstoffen mit Verstärkungselementen und weist dabei üblicherweise nach seiner Herstellung an seinen beiden Enden unterschiedliche Durchmesser auf, nämlich kleineren Durchmesser für den Anschluss/die Verbindung am Luftfederkolben und einen größeren Durchmesser für den Anschluss am Luftfederdeckel. Meistens ist der Luftfederkolben am Fahrwerk angeschlossen und der Luftfederdeckel an der Karosserie.

Ein Rollbalg wird zunächst als zylindrischer Körper aus mehreren Gummilagen und Lagen von - teilweise gummierten - Festigkeitsträgern so konfektioniert, d.h. zusammengebaut, dass ein Schlauch mit ggf. mehreren im Gummi eingebundenen Lagen von Festigkeitsträgern entsteht. Die Festigkeitsträger sind in ihren Lagen in einem Winkel, nämlich im sogenannten Fadenwinkel zur Achse bzw. zur Achsnormalen des zylindrischen Körpers ausgerichtet. Dabei sind weiterhin oft die Festigkeitsträger in benachbarten Lagen zueinander gekreuzt angeordnet, also einmal zur einen und einmal zur anderen Seite bezogen auf die Achse winklig ausgerichtet. In einer Abwicklung der Festigkeitsträgerlagen des Zylinders ergäbe sich dann also eine gekreuzte Anordnung der Festigkeitsträger, die bei z.B. nur zwei Festigkeitsträgerlagen einem Jägerzaun ähneln würde.

Der Fadenwinkel lässt sich, wie bereits angedeutet, in Bezug auf die Achse unterschiedlich definieren, wird aber hier als der Winkel verstanden, der sich zwischen der Senkrechten, d.h. der Normalen zur Balgachse und den Festigkeitsträgern ergibt. Ein großer Winkel würde dann im Extremfall 90° erreichen können, womit die Festigkeitsträger einer solchen Lage parallel zur Balgachse liefen, während ein kleiner Winkel höchsten 0° erreichen könnte und die Festigkeitsträger einer solchen Lage somit senkrecht die Balgachse kreuzen würden.

Nach der Konfektion wird der Rollbalg konisch aufgeweitet und vulkanisiert. Bei diesem Herstellungsschritt werden auch die unterschiedlichen Durchmesser erzeugt und durch den in der Wärme erfolgende Vulkanisationsprozess fixiert.

Während des Aufweitens des ursprünglich zylindrischen Körpers ändert sich der Fadenwinkel etwa wie bei einer Scherenbewegung. Dies erfolgt jedoch über die Länge des Rollbalges nicht gleichmäßig, sondern, bedingt durch die konische Aufweitung, in unterschiedlichem Maße. Ausgehend von einem Fadenwinkel von etwa 53° nach der Konfektion entsteht beim konischen Aufweiten, nur um einmal Größenordnungen zu nennen, ein Fadenwinkel von etwa 47° im Bereich des kleineren Durchmessers und von etwa 30° bis 35° im Bereich des größeren Durchmessers.

Die entstandenen Fadenwinkel sind ebenso wie die Durchmesser nach der Vulkanisation fixiert. Wie oben bereits dargestellt, sind der kleinere Durchmesser für den Anschluss an den Luftfederkolben und der größere Durchmesser für den Anschluss an den Luftfederdeckel vorgesehen.

Im Betriebszustand, d.h. nach dem Einbau des Rollbalges in die Luftfeder und nach deren Befüllung mit Druckluft und bei Belastung bildet der Rollbalg die Rollfalte aus, die ausgehend von dem Anschluss des Rollbalges an den Luftfederkolben in Form eines "Umschlages" in den größeren Durchmesser der Balgkörpers übergeht und dabei auf der Außenseite des Luftfederkolbens, d.h. auf der Abrollkontur abrollt.

Durch diese Befüllung mit Druckluft wird aber der Rollbalg noch einmal einer mechanischen Ausdehnung unterworfen, die nun dazu führt, dass sich der "eingefrorene" Fadenwinkel im Bereich des mittleren Rollbalges / Balgkörpers noch einmal ändert, nämlich auf ca. 25°. Somit kann man näherungsweise davon ausgehen, dass bei einem Rollbalg nach dem Stand der Technik im Bereich des Anschlusses an den Luftfederkolben ein Fadenwinkel von etwa 47° vorherrschen sein wird, während sich durch den Innendruck in der Luftfeder im mittleren Rollbalgbereich, also etwa im zylindrischen Teil der Luftfederkammer, ein Fadenwinkel von etwa 25° ausbildet. Der Fadenwinkel von 47° wird dabei auch nach der Vulkanisation als im Wesentlichen spannungsfreier Bereich (σ → 0, σ = Spannungsbelastung) angesehen.

Da zwischen dem Bereich des Anschlusses an den Luftfederkolben und dem mittleren Rollbalgbereich die Rollfalte ausgebildet ist, bewegt sich also das Balgmaterial im Rollfaltenbereich beim Abrollen des Balges auf der Abrollkontur zwischen dem durch Innendruck aufgeweiteten Durchmessers des mittleren Rollbalgbereiches und - näherungsweise - dem Außendurchmesser des Kolbens / der Abrollkontur hin und her.

Dadurch werden nun die Festigkeitsträger im Rollfaltenbereich einer starken dynamischen Wechselbelastung durch einen sich ständig zwischen etwa 47° (σ → 0) uns 25° (σ → max) ändernden Fadenwinkel unterworfen. Dies kann im Extremfall zu Lagentrennungen und den sich daraus ergebenden Ausfällen der Luftfeder führen.

Die US 4,763,883 zeigt einen Rollbalg mit einvulkanisierten Verstärkungselementen, die aus mehreren winklig zur Fadenachse angeordneten Fadenlagen bestehen. Der Winkel der Fadenlagen ist über die Balglänge nicht konstant, sondern ändert sich in einzelnen Ringbereichen, d.h. in einzelnen Teilen des Balges, nämlich im Bereich der sogenannten Federkammer, d.h. des mittleren Rollbalgbereiches, oder aber im Bereich der Rollfalte.

Mit dieser Maßnahme wird offenbar die Kontur und damit die Federrate des Balges beeinflusst. So bildet sich die Rollfalte eines solchen Balges beispielsweise in Form eines nach außen vorgewölbten blasenförmigen Wulstes aus und stellt somit einen größeren "wirksamen Durchmesser" bereit.

Es zeigt sich bei einer solchen Ausführung der Nachteil, dass auch bei veränderlichem Fadenwinkel durch die ausgeprägte Vorwölbung der Rollfalte eine eher verstärkte Änderung der Fadenwinkel zu befürchten ist und damit eine ausgeprägte dynamische Wechselbelastung.

Die GB 1143665 A zeigt eine Luftfeder aus Gummi oder ähnlichem Material, die in ihrem Querschnitt U-förmig oder Doppel-U-förmig ausgebildet ist und mit Verstärkungselementen in Form von Drähten versehen ist, die nicht dicker als 0,12 mm sind und einen Elastizitätsmodul zwischen 500 und 5.000 kg/mm2 aufweisen.

Daraus ergibt sich, dass Ermüdungsbrüche bzw. Ermüdungserscheinungen im Gummi vermieden werden, sodass durch die Vulkanisation in U-Form die Bewegungen und Spannungsbelastungen der Luftfeder nur um diesen mittleren Bereich herum stattfinden und somit keine Extrema erreicht werden.

Ebenfalls zeigt die DE 19614476 A1 eine Luftfeder mit konstantem Fadenwinkel und ein Verfahren zur Herstellung einer solchen Luftfeder, bei der zwei Teilbälge vorgesehen sind, deren Fadenwinkel sich unterscheidet.

Damit werden durch unterschiedliche Fadenwinkel in einzelnen Luftfederbereichen einerseits ein gutes Abrollen und andererseits gute Federungseigenschaften im "Bauchbereich" der Luftfeder erreicht.

Für die Erfindung bestand somit die Aufgabe, einen Luftfeder-Rollbalg bereitzustellen der insbesondere im Bereich seiner Rollfalte ein verbessertes Spannungsverhalten und damit eine höhere Lastaufnahmefähigkeit bzw. eine höherer Lebensdauer bei gleichen Belastungskollektiven erreichen kann.

Gelöst wird diese Aufgabe durch die Merkmale des Hauptanspruchs. Vorteilhafte Weiterbildungen sind in den Unteransprüchen enthalten.

Dabei sind - nach seiner Konfektion und Herstellung - die Festigkeitsträger in den Bereichen der Rollfaltenbildung des Rollbalges in einem solchen Winkel in der Rollbalgwand einvulkanisiert, dass beim Abrollen der Rollfalte auf der zugehörigen Abrollkontur die Amplitude der dabei erfolgenden Spannungsänderung in der Rollbalgwand minimiert wird.

Die erfindungsgemäße Lösung besteht also darin, den Rollbalg so auszubilden, dass im unbelasteten Betriebszustand (statischen Zustand) im Bereich der Rollfalte ein mittlerer und zwischen den Extrema liegender Fadenwinkel so ausgebildet ist, dass sich ein zwischen den Extrema der Spannungen liegender mittlerer Spannungszustand im Rollfaltenbereich ausbildet. Dieser "mittleren" Spannungszustand kann nun so ausgelegt werden, dass als maßgebliche Bezugsspannungen Druckoder Zugspannungen, Schubspannungen (σ, τ) oder zusammengesetzte weitere Spannungen zur Bestimmung der Fadenwinkel herangezogen werden.

Weiterhin besteht die erfindungsgemäße Lösung darin, dass die Festigkeitsträger in den Bereichen der Rollfaltenbildung des Rollbalges in einem solchen Winkel in der Rollbalgwand einvulkanisiert sind, dass beim Abrollen der Rollfalte auf der zugehörigen Abrollkontur die Amplitude der dabei erfolgenden Fadenwinkeländerung minimiert wird.

Ein solcher einvulkanisierter "mittlerer" Winkel entsteht dabei im Zusammenwirken mit der vorteilhaften Ausbildung, dass die Kontur des Rollbalges nach seiner Herstellung (Vulkanisation) im wesentlichen zylindrisch abgestuft ist. Beim Abrollen der Rollfalte auf der zugehörigen Abrollkontur wird die Amplitude der dabei erfolgenden Spannungsänderung in der Rollbalgwand und / oder die Amplitude der dabei erfolgenden Fadenwinkeländerung minimiert. Durch eine solche besondere geometrische Ausbildung der Aufweitung vor der Vulkanisation, die so ausgelegt ist, dass der Rollbalg während der Vulkanisation eine im Wesentlichen leicht gestufte Zylinderform annimmt, weist der nach der Vulkanisation vorliegende und praktisch "eingefrorene" Fadenwinkel für den gesamten Rollfaltenbereich einen Mittelwert auf, der zwischen den beiden Winkel-Extrema liegt, wie sie beim vollständigen Ein- und Ausfedern entstehen können.

Eine weitere vorteilhafte Ausführung besteht darin, dass die Festigkeitsträger im Bereich der zylindrischen Luftfederkammer, d.h. im Bereich der sogenannten Federkammer des Rollbalges in einem solchen Winkel (Gleichgewichtswinkel) in der Rollbalgwand einvulkanisiert sind, dass die Rollbalgwand im statischen Betriebszustand des Luftfederbalges im Wesentlichen spannungsfrei ist. Damit treten Spannungen erst mit dynamischer Belastung auf, wodurch sich das Lastkollektiv zur größerer Dauerfestigkeit / Lebensdauer verschiebt.

Natürlich gilt dies insbesondere auch für eine weitere vorteilhafte Ausführung, die darin besteht, dass in der Balgwand des Luftfeder-Rollbalgs mehrere Lagen von Festigkeitsträgern angeordnet sind, deren Fadenwinkel sich im Verhältnis zueinander jeweils kreuzen. Hierdurch erhöht sich die Tragfähigkeit um ein Vielfaches.

Eine weitere vorteilhafte Ausführung besteht darin, dass die Festigkeitsträger in den Bereichen der Rollfaltenbildung des Rollbalges in einem über den Rollfaltenbereich veränderlichen Winkel in der Rollbalgwand einvulkanisiert sind. Damit lässt sich für nahezu jeden Punkt, d.h. fein abgestuft für jeden schmalen Ring der zum Rollfaltenbereich gehörigen Balgwand der passende "mittlere" Winkel einstellen, der einen zwischen den Extremwerten der sich aufbauenden Spannungen liegenden mittleren Spannungszustand ausbildet.

Eine weitere vorteilhafte Ausführung besteht darin, dass die Festigkeitsträger in den Bereichen der Rollfaltenbildung des Rollbalges in einem Winkel von 20° bis 45° zur Achsnormalen des Rollbalges in der Rollbal-gwand einvulkanisiert sind. Diese Winkelbereiche eignen sich bei üblichen Abmessungen von Rollbälgen für mittelschwere Kraftfahrzeuge (Pkw) als Näherungswert bereits recht gut, um die erfindungsgemäße Spannungsausbildung und Winkeländerung zu erreichen.

Eine vorteilhaftes und besonders geeignetes Verfahren zur Herstellung eines erfindungsgemäßen Luftfeder-Rollbalg besteht darin, dass der Rollbalg nach der Konfektion im Wesentlichen so vulkanisiert wird, dass für Teilbereiche ein mittlerer und zwischen den Extrema der Fadenwinkeländerungen liegender Fadenwinkel so eingestellt wird, dass beim Abrollen der Rollfalte auf der zugehörigen Abrollkontur die Amplitude steht darin, dass der Rollbalg nach der Konfektion im Wesentlichen so vulkanisiert wird, dass für Teilbereiche ein mittlerer und zwischen den Extrema der Fadenwinkeländerungen liegender Fadenwinkel so eingestellt wird, dass beim Abrollen der Rollfalte auf der zugehörigen Abrollkontur die Amplitude der dabei im gesamten Rollfaltenbereich erfolgenden Spannungsänderung in der Rollbalgwand minimiert wird.

Anhand eines Ausführungsbeispieles soll die Erfindung näher erläutert werden. Es zeigen
- Fig. 1: einen erfindungsgemäßen Luftfeder-Rollbalg nach der Vulkanisation im Schnitt
- Fig. 2: einen Luftfeder-Rollbalg nach dem Stand der Technik nach der Vulkanisation im Schnitt
- Fig. 3: eine Luftfeder mit einem erfindungsgemäßen Rollbalg im eingefederten und im ausgefederten Zustand als Prinzipskizze im Schnitt

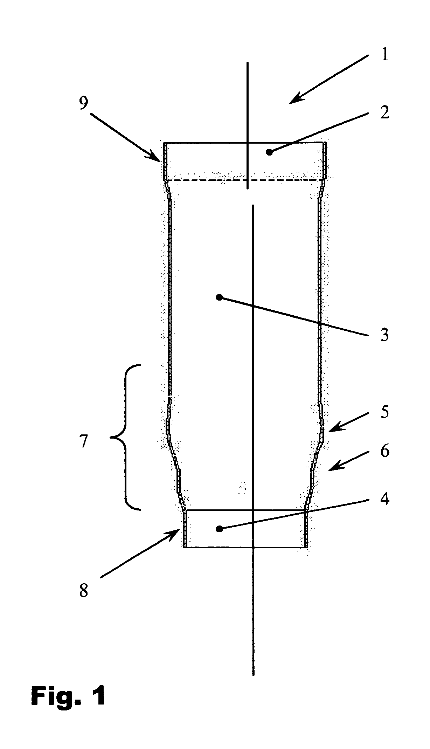

Die Fig. 1 zeigt einen erfindungsgemäßen Luftfeder-Rollbalg nach der Vulkanisation im Schnitt. Der Luftfeder-Rollbalg 1 weist eine die Kontur auf, die im wesentlichen die zylindrischen Bereiche 2, 3 und 4 sowie den mit Übergängen und einer dazwischenliegenden leichten Aufweitung 5 und einem Einzug 6 versehenen Rollfaltenbereich 7. Während die Bereiche 2 und 4 als Anschlussdurchmesserbereiche in zylindrischer Form üblich sind, ist hierbei der zylindrische Bereich 3 erfindungswesentlich. Damit ist der Luftfeder-Rollbalg im Zusammenwirken mit dem erfindungsgemäß angepassten Fadenwinkel der Festigkeitsträger, die in diesem Bereich 3 und in den Bereichen der Rollfaltenbildung 7 des Rollbalges in einvulkanisiert sind, so ausgeformt, dass beim Abrollen der Rollfalte auf der zugehörigen Abrollkontur die Amplitude der dabei erfolgenden Spannungsänderung in der Rollbalgwand und / oder die Amplitude der dabei erfolgenden Fadenwinkeländerung minimiert wird. Die Endbereiche des Luftfeder-Rollbalges sind natürlich so in ihren Durchmessern 8 und 9 ausgebildet, dass der jeweilige Anschluss am Luftfederkolben und am Luftfederdeckel ermöglicht wird.

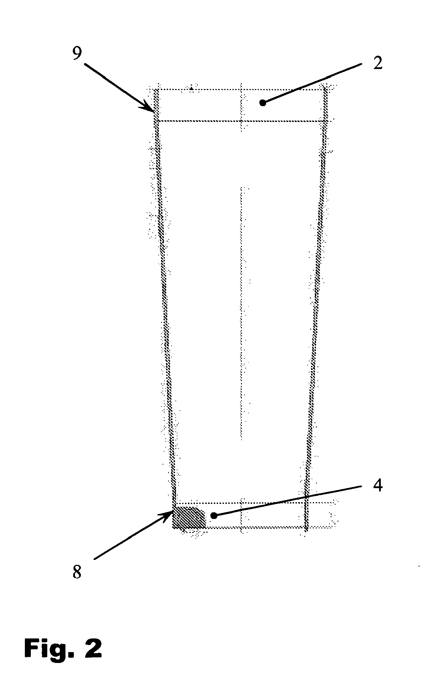

Die Fig. 2 zeigt einen Luftfeder-Rollbalg nach dem Stand der Technik nach der Vulkanisation im Schnitt. Deutlich erkennt man hier die übliche leicht konische Ausbildung, mit der einzig der Zweck verfolgt wird, dass ein linearer Übergang auf die an seinen beiden Enden unterschiedlichen Durchmesser ausgebildet werden kann, nämlich vom kleineren Durchmesser 8 für den Anschluss/die Verbindung am Luftfederkolben auf einen größeren Durchmesser 9 für den Anschluss am Luftfederdeckel. Meistens ist der Luftfederkolben am Fahrwerk angeschlossen und der Luftfederdeckel an der Karosserie. Beide Anschlusspunkte sind hier nicht weiter dargestellt.

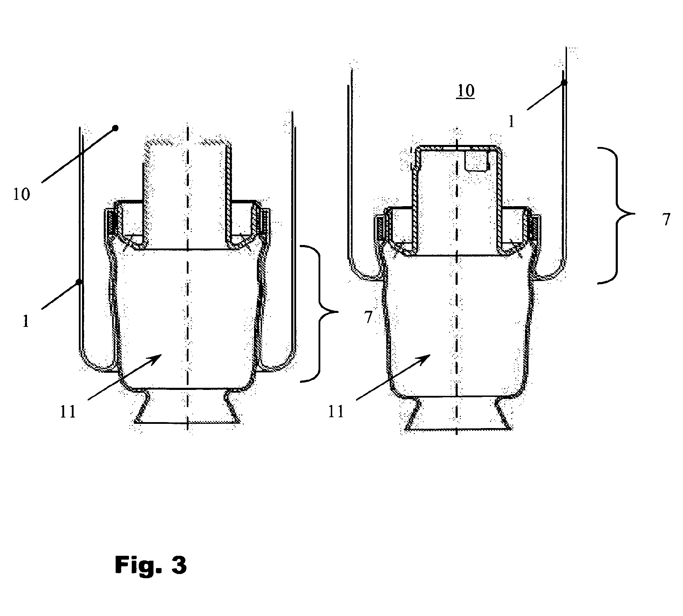

Fig. 3 zeigt den unteren Teil einer Luftfeder mit einem erfindungsgemäßen Rollbalg im eingefederten und im ausgefederten Zustand als Prinzipskizze im Schnitt. Der Rollbalg 1 bildet zusammen mit den Anschlussteilen eine im Wesentlichen zylindrische Luftfederkammer 10 aus. Dargestellt ist lediglich der hier interessante Rollfaltenbereich 7, wobei die dort ausgebildete Rollfalte auf der Außenkontur / Abrollkontur des Kolbens 11 abrollt und sich somit der Rollfaltenbereich 7 in unterschiedliche Positionen darstellt, nämlich einmal eingefedert auf der linken Seite und einmal ausgefedert auf der rechten Seite der Fig.3.

### Bezugszeichenliste

### (Teil der Beschreibung)

- 1: Luftfeder-Rollbalg
- 2: Zylindrischer Bereich
- 3: Zylindrischer Bereich
- 4: Zylindrischer Bereich
- 5: Aufweitung
- 6: Einzug
- 7: Rollfaltenbereich
- 8: Anschlussdurchmesser für Luftfederkolben
- 9: Anschlussdurchmesser für Luftfederdeckel
- 10: Luftfederkammer
- 11: Luftfederkolben mit Abrollkontur

## Patentansprüche

1. Luftfeder-Rollbalg (1) mit mindestens einer innerhalb der Rollbalgwand angeordneten Lage von Festigkeitsträgern, wobei der Rollbalg so zwischen zwei Anschlussteilen befestigt ist, dass der Rollbalg unter Befüllung mit Druckluft eine einem Anschlussteil benachbarte Rollfalte und eine sich daran anschließende und im Wesentlichen zylindrische Luftfederkammer (10) ausbildet, wobei die Festigkeitsträger der einzelnen Lagen in einem Winkel zur Rollbalgachse ausgerichtet sind, wobei die Festigkeitsträger in den Bereichen der Rollfaltenbildung (7) des Rollbalges (1) in einem solchen Winkel in der Rollbalgwand einvulkanisiert sind, dass beim Abrollen der Rollfalte auf der zugehörigen Abrollkontur die Amplitude der dabei erfolgenden Spannungsänderung in der Rollbalgwand minimiert wird , **dadurch gekennzeichnet, dass** die Festigkeitsträger in den Bereichen der Rollfaltenbildung (7) des Rollbalges (1) in einem solchen Winkel in der Rollbalgwand einvulkanisiert sind, dass beim Abrollen der Rollfalte auf der zugehörigen Abrollkontur die Amplitude der dabei erfolgenden Fadenwinkeländerung so minimiert wird, dass sich ein zwischen den Extrema der Spannungen liegender mittlerer Spannungszustand im Rollfaltenbereich ausbildet.

2. Luftfeder-Rollbalg nach Anspruch 1, **dadurch gekennzeichnet, dass** die Kontur (2, 3, 4) des Rollbalges (1) nach seiner Herstellung im wesentlichen so ausgeformt ist, dass beim Abrollen der Rollfalte auf der zugehörigen Abrollkontur die Amplitude der dabei erfolgenden Spannungsänderung in der Rollbalgwand und / oder die Amplitude der dabei erfolgenden Fadenwinkeländerung minimiert wird.

3. Luftfeder-Rollbalg nach Anspruch 1 oder 2, **dadurch gekennzeichnet, dass** die Festigkeitsträger im Bereich der zylindrischen Luftfederkammer (10) des Rollbalges in einem solchen Winkel in der Rollbalgwand einvulkanisiert sind, dass die Rollbalgwand im statischen Betriebszustand des Luftfederbalges (1) im Wesentlichen spannungsfrei ist.

4. Luftfeder-Rollbalg nach Anspruch 1 bis 3, **dadurch gekennzeichnet, dass** in der Balgwand des Luftfeder-Rollbalgs (1) mehrere Lagen von Festigkeitsträgern angeordnet sind, deren Fadenwinkel sich im Verhältnis zueinander jeweils kreuzen.

5. Luftfeder-Rollbalg nach Anspruch 1 bis 4, **dadurch gekennzeichnet, dass** die Festigkeitsträger in den Bereichen der Rollfaltenbildung des Rollbalges (1) in einem über den Rollfaltenbereich veränderlichen Winkel in der Rollbalgwand einvulkanisiert sind.

6. Luftfeder-Rollbalg nach Anspruch 1 bis 4, **dadurch gekennzeichnet, dass** die Festigkeitsträger in den Bereichen der Rollfaltenbildung (7) des Rollbalges (1) in einem Winkel von 20° bis 45° zur Achsnormalen des Rollbalges in der Rollbalgwand einvulkanisiert sind.

7. Verfahren zur Herstellung eines Luftfeder-Rollbalg nach den Ansprüchen 1 bis 6, **dadurch gekennzeichnet, dass** der Rollbalg nach der Konfektion im Wesentlichen so vulkanisiert wird, dass für Teilbereiche ein mittlerer und zwischen den Extrema der Fadenwinkeländerungen liegender Fadenwinkel so eingestellt wird, dass beim Abrollen der Rollfalte auf der zugehörigen Abrollkontur die Amplitude der dabei im gesamten Rollfaltenbereich erfolgenden Spannungsänderung in der Rollbalgwand minimiert wird.

## Claims

1. Pneumatic spring concertina (1) with at least one ply of strengtheners which is arranged within the concertina wall, the concertina being fastened between two connection parts such that the concertina, by being filled with compressed air, forms a rolling fold adjacent to one connection part and an essentially cylindrical pneumatic spring chamber (10) following the said rolling fold, the strengtheners of the individual plies being oriented at an angle to the concertina axis, the strengtheners being vulcanized in the concertina wall, in the regions of the rolling-fold formation (7) of the concertina (1), at such an angle that, when the rolling fold rolls on the associated rolling contour, the amplitude of the tension change taking place in this case in the concertina wall is minimized, **characterized in that** the strengtheners are vulcanized in the concertina wall, in the regions of the rolling-fold formation (7) of the concertina (1), at such an angle that, when the rolling fold rolls on the associated rolling contour, the amplitude of the fibre-angle change taking place in this case is minimized such that a medium tension state lying between the extremes of tensions is formed in the rolling-fold region.

2. Pneumatic spring concertina according to Claim 1, **characterized in that** the contour (2, 3, 4) of the concertina (1) after its production is shaped essentially such that, when the rolling fold rolls on the associated rolling contour, the amplitude of the tension change taking place in this case in the concertina wall and/or the amplitude of the fibre-angle change taking place in this case are/is minimized.

3. Pneumatic spring concertina according to Claim 1 or 2, **characterized in that** the strengtheners are vulcanized in the concertina wall, in the region of the cylindrical pneumatic spring chamber (10) of the concertina, at such an angle that, in the static operating state of the pneumatic spring concertina (1), the concertina wall is essentially tension-free.

4. Pneumatic spring concertina according to Claims 1 to 3, **characterized in that** a plurality of plies of strengtheners, the fibre angles of which in each case intersect in relation to one another, are arranged in the concertina wall of the pneumatic spring concertina (1).

5. Pneumatic spring concertina according to Claims 1 to 4, **characterized in that** the strengtheners are vulcanized in the concertina wall, in the regions of the rolling-fold formation of the concertina (1), at an angle which is variable over the rolling-fold region.

6. Pneumatic spring concertina according to Claims 1 to 4, **characterized in that** the strengtheners are vulcanized in the concertina wall, in the regions of the rolling-fold formation (7) of the concertina (1), at an angle of 20° to 45° to the axial normal of the concertina.

7. Method for producing a pneumatic spring concertina according to Claims 1 to 6, **characterized in that** the concertina, after being made, is vulcanized essentially such that a medium fibre angle lying between the extremes of the fibre-angle changes is set for subregions such that, when the rolling fold rolls on the associated rolling contour, the amplitude of the tension change taking place in this case in the concertina wall in the entire rolling-fold region is minimized.

## Revendications

1. Soufflet roulant de ressort pneumatique (1) comprenant au moins une couche de supports de renforcement disposée à l'intérieur de la paroi du soufflet roulant, le soufflet roulant étant fixé entre deux parties de raccordement de telle sorte que le soufflet roulant, en se remplissant d'air sous pression, forme un pli roulant adjacent à une partie de raccordement et une chambre de ressort pneumatique s'y raccordant (10), essentiellement cylindrique, les supports de renforcement des couches individuelles étant orientés suivant un angle par rapport à l'axe du soufflet roulant, les supports de renforcement étant vulcanisés dans les régions de formation du pli roulant (7) du soufflet roulant (1) suivant un tel angle dans la paroi du soufflet roulant que lors du roulement du pli roulant sur le contour de roulement associé, l'amplitude de la variation de contrainte résultante dans la paroi du soufflet roulant soit minimisée, **caractérisé en ce que** les supports de renforcement sont vulcanisés dans les régions de la formation du pli roulant (7) du soufflet roulant (1) suivant un tel angle dans la paroi du soufflet roulant que lors du roulement du pli roulant sur le contour de roulement associé, l'amplitude de la variation de l'angle de fil résultante soit minimisée de telle sorte qu'un état de contrainte moyen situé entre les extrêmes de contrainte soit obtenu dans la région du pli roulant.

2. Soufflet roulant de ressort pneumatique selon la revendication 1, **caractérisé en ce que** le contour (2, 3, 4) du soufflet roulant (1) après sa fabrication est formé essentiellement de telle sorte que lors du roulement du pli roulant sur le contour de roulement associé, l'amplitude de la variation de contrainte résultante dans la paroi du soufflet roulant et/ou l'amplitude de la variation d'angle de fil résultante soient minimisées.

3. Soufflet roulant de ressort pneumatique selon les revendications 1 ou 2, **caractérisé en ce que** les supports de renforcement sont vulcanisés dans la région de la chambre de ressort pneumatique cylindrique (10) du soufflet roulant suivant un tel angle dans la paroi du soufflet roulant que la paroi du soufflet roulant, dans l'état de fonctionnement statique du soufflet de ressort pneumatique (1), soit essentiellement sans contrainte.

4. Soufflet roulant de ressort pneumatique selon les revendications 1 à 3, **caractérisé en ce que** dans la paroi de soufflet du soufflet roulant de ressort pneumatique (1) sont disposées plusieurs couches de supports de renforcement dont les angles de fil se croisent à chaque fois mutuellement l'un par rapport à l'autre.

5. Soufflet roulant de ressort pneumatique selon les revendications 1 à 4, **caractérisé en ce que** les supports de renforcement, dans les régions de formation du pli roulant du soufflet roulant (1), sont vulcanisés suivant un angle variant sur la plage du pli roulant dans la paroi du soufflet roulant.

6. Soufflet roulant de ressort pneumatique selon les revendications 1 à 4, **caractérisé en ce que** les supports de renforcement, dans les régions de formation du pli roulant (7) du soufflet roulant (1), sont vulcanisés suivant un angle de 20° à 45° par rapport à la normale à l'axe du soufflet roulant dans la paroi du soufflet roulant.

7. Procédé de fabrication d'un soufflet roulant de ressort pneumatique selon les revendications 1 à 6, **caractérisé en ce que** le soufflet roulant, après sa confection, est vulcanisé essentiellement de telle sorte que pour des régions partielles, un angle de fil moyen se situant entre les extrêmes des variations d'angle de fil soit ajusté de telle sorte que lors du roulement du pli roulant sur le contour de roulement associé, l'amplitude de la variation de contrainte résultante dans l'ensemble de la région du pli roulant soit minimisée dans la paroi du soufflet roulant.
